# EUROPÄISCHE PATENTSCHRIFT

(11) **EP 4 056 013 B1**
(45) Veröffentlichungstag und Bekanntmachung des Hinweises auf die Patenterteilung: **18.03.2026**
(21) Anmeldenummer: 22157165.6
(22) Anmeldetag: 17.02.2022
(51) Int. Cl.: A01C 15/04

(54) **PNEUMATISCHE VERTEILMASCHINE MIT EINER MEHRZAHL AN VERTEILORGANEN UND VERTEILORGAN FÜR EINE SOLCHE VERTEILMASCHINE**
PNEUMATIC DISTRIBUTION MACHINE WITH A PLURALITY OF DISTRIBUTION MEMBERS AND DISTRIBUTION MEMBER FOR SUCH A DISTRIBUTION MACHINE
ÉPANDEUR PNEUMATIQUE DOTÉE D'UNE PLURALITÉ D'ÉLÉMENTS D'ÉPANDAGE ET ÉLÉMENT D'ÉPANDAGE POUR UNE TELLE ÉPANDEUR

(30) Priorität: 08.03.2021 DE 202021101157 U
(43) Veröffentlichungstag der Anmeldung: 14.09.2022
(73) Patentinhaber: RAUCH Landmaschinenfabrik GmbH, 77836 Rheinmünster (DE)
(72) Erfinder: Beck, Fabian, 76829 Landau (DE); Stöcklin, Volker, 77975 Ringsheim (DE)
(74) Vertreter: Lichti - Patentanwälte Partnerschaft mbB

(56) Entgegenhaltungen:
- EP-B1- 0 244 712
- EP-B1- 3 409 090
- DE-U- 7 342 355

## Beschreibung

Die Erfindung betrifft eine pneumatische Verteilmaschine zum Ausbringen von Verteilgut, umfassend
- wenigstens einen von einem Rahmen getragenen Vorratsbehälter mit wenigstens einer Auslauföffnung;
- wenigstens ein der Auslauföffnung des Vorratsbehälters nachgeordnetes Dosierorgan mit einer rotierbar angetriebenen Dosierwalze zur Dosierung des Verteilgutes;
- wenigstens eine dem Dosierorgan nachgeordnete Übergabekammer, welche einerseits mit wenigstens einem Gebläse in Verbindung steht und welche andererseits in je eine Förderleitung mündet, um das von dem Dosierorgan dosierte Verteilgut pneumatisch an je ein Verteilorgan zu überführen, welche mit seitlichem Abstand von der Längsachse der Verteilmaschine angeordnet sind,
wobei die Verteilorgane jeweils einen, an dem freien Ende einer jeweiligen Förderleitung montierbaren Prallkörper aufweisen.

Die Erfindung bezieht sich ferner auf ein für eine solche Verteilmaschine geeignetes Verteilorgan, welches einen, an dem freien Ende einer jeweiligen Förderleitung der Verteilmaschine montierbaren Prallkörper aufweist.

Derartige pneumatische Verteilmaschinen sind insbesondere in Form von pneumatischen Düngerstreuern und/oder Sämaschinen zum Ausbringen von pulver- bzw. partikelförmigem Verteilgut, wie Dünger, Saatgut und dergleichen, in verschiedener Ausgestaltung bekannt und umfassen üblicherweise einen Vorratsbehälter zur Aufnahme des Verteilgutes, unterhalb dessen das oder die Dosierorgan(e) angeordnet ist bzw. sind. Während als Dosierorgane häufig auch mit einer Auslauföffnung des Vorratsbehälters zusammenwirkende, aktuatorisch oder manuell betätigte Dosierschieber zum Einsatz gelangen, weist das Dosierorgan bei den hier in Frage stehenden pneumatischen Verteilmaschinen in der Regel eine rotierbar angetriebene Dosierwalze auf, welche in Form einer Zellenrad- und/oder Nockenradwalze ausgestaltet sein kann. Die Dosierwalze ist in einem Dosiergehäuse gelagert, welches üblicherweise einen an seiner Oberseite angeordneten, mit einer Auslauföffnung des Vorratsbehälters in Verbindung stehenden Einlass und eine an seiner Unterseite angeordneten Auslass aufweist (vgl. **z.B.** die EP 2 786 649 B1).

Gattungsgemäße pneumatische Verteilmaschinen können einerseits in leichter Bauart als Anbaugeräte konzipiert sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise seitlich nach außen ragende Ausleger, welche in unterschiedlichem Abstand voneinander endende Förderleitungen aufnehmen. Zur Förderung des Verteilgutes dient ein Gebläse, dessen Druckleitung sich an einen Auslass des Dosiergehäuses eines jeweiligen Dosierorgans anschließt und in einem Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Streugutes von der Dosierwalze des Dosierorgans an die Förderleitungen, um sicherzustellen, dass jeder Förderleitung die gewünschte Menge an Verteilgut aufgegeben wird. Das Verteilgut wird schließlich pneumatisch über die nach außen umgelenkten Förderleitungen bis zu deren Ende gefördert, wo das Streugut an entsprechende Verteilorgane überführt wird. Dabei enden die Förderleitungen üblicherweise in je einem nach unten oder - in Fahrtrichtung der Verteilmaschine betrachtet - nach hinten weisenden Krümmer, an welche sich die jeweiligen Verteilorgane anschließen. Letztere sind in der Regel nach Art von Prallplatten bzw. Pralltellern ausgestaltet, auf welche das in einer jeweiligen Förderleitung pneumatisch transportierte Verteilgut auftrifft und von dort im Wesentlichen fächerförmig auf dem Boden abgelegt wird. Die sich senkrecht zur Fahrtrichtung der pneumatischen Verteilmaschine erstreckende Breite eines jeweiligen Streufächers, welcher mittels eines jeweiligen Verteilorgans auf dem Boden abgelegt wird, ist im Rahmen der vorliegenden Offenbarung als "Verteilungsbreite" bezeichnet. Sie entspricht in der Regel etwa dem Doppelten des seitlichen Abstandes der Verteilorgane. Infolge der Überlappung der einzelnen Streufächer der einzelnen Verteilorgane quer zur Fahrtrichtung der pneumatischen Verteilmaschine wird eine gleichmäßige Querverteilung des Verteilgutes über die gesamte Arbeitsbreite erreicht.

Eine derartige pneumatische Verteilmaschine ist in Form eines pneumatischen Düngerstreuers beispielsweise aus der DE 10 2004 030 240 A1 bekannt. Die bekannte pneumatische Verteilmaschine weist dabei eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen gruppenweise mehrere Förderleitungen abgehen, welche in je einem Verteilorgan münden. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können. Ferner lassen sich durch sukzessives Einschalten bzw. Ausschalten der Dosierorgane derart, dass zunächst die mit den äußeren Verteilorganen in Verbindung stehenden Dosierorgane eingeschaltet werden und sodann erst die weiter inneren bzw. dass zunächst die mit den inneren Verteilorganen in Verbindung stehenden Dosierorgane abgeschaltet werden und sodann erst die weiter äußeren, die zum pneumatischen Transport des Verteilgutes durch die verschieden langen Förderleitungen erforderlichen unterschiedlichen Transportzeiten kompensieren, so dass der Verteilvorgang am Anfang des Feldes gleichmäßig begonnen bzw. am Ende des Feldes gleichmäßig beendet werden kann. Darüber hinaus ist es durch Antrieb der Dosierwalzen der Dosierorgane mit unterschiedlichen Rotationsgeschwindigkeiten auch möglich, verschiedenen Feldbereichen mit unterschiedlichem Versorgungsbedarf an Verteilgut innerhalb der gesamten Arbeitsbreite Rechnung zu tragen oder bei der Kurvenfahrt andernfalls im Kurveninneren entstehende Überversorgungen bzw. im Kurvenäußeren entstehende Unterversorgungen zu kompensieren. Auf diese Weise lässt sich folglich eine Teilbreitenschaltung realisieren, indem die unabhängig voneinander drehangetrieben Dosierwalzen der Dosierorgane jeweils mit Gruppen von Verteilorganen kommunizieren. Weitere gattungsgemäße pneumatische Verteilmaschinen sind z.B. den EP 3 409 090 B1 und EP 3 629 694 B1 zu entnehmen.

In Bezug auf eine gleichmäßige Verteilung des Verteilgutes quer zur Fahrtrichtung der Verteilmaschine ist es von großer Bedeutung, dass sich einerseits die von einem jeweiligen Verteilorgan erzeugten Streufächer in möglichst spiegelsymmetrischer Form zu beiden Querseiten eines jeweiligen Verteilorgans hin abgeworfen werden, andererseits die Massenverteilung an Verteilgut zu beiden Seiten eines jeweiligen Verteilorgans möglichst spiegelsymmetrisch ist. In diesem Zusammenhang spielt einerseits die Geometrie von endständigen Krümmern einer jeweiligen Förderleitung eine Rolle, welche dazu dienen, eine jeweilige, sich quer zur Fahrtrichtung entlang von Auslegern erstreckende Förderleitung in Richtung eines jeweiligen Verteilorgans umzulenken. Während die Krümmer bei gezogenen, selbstfahrenden Verteilmaschinen mit einer in der Regel vorhandenen Höhenverstellung der die Förderleitungen quer zur Fahrtrichtung tragenden Ausleger in der Regel etwa vertikal angeordnet sein können, um das Verteilgut um ca. 90° nach unten abzulenken und einem jeweiligen Verteilorgan zuzuführen, erweist sich bei von einem Dreipunkt-Kraftheber, wie z.B. eines Traktors, aufgenommenen Verteilmaschinen die Hubhöhe zum Anheben der Verteilmaschine häufig als begrenzt, weshalb die Umlenkung des Verteilgutes mittels der Krümmer am Ende einer jeweiligen Förderleitung auch etwa horizontal, insbesondere in Fahrtrichtung nach hinten, erfolgen kann. Ein zum gleichmäßigen Zuführen des Verteilgutes an ein jeweiliges Verteilorgan in besonderem Maße geeigneter, endständiger Krümmer der Förderleitung ist beispielsweise aus der EP 0 277 288 B1 bekannt.

Andererseits erweist sich in Bezug auf eine gleichmäßige Verteilung des Verteilgutes quer zur Fahrtrichtung der Verteilmaschine insbesondere die Geometrie der Verteilorgane als entscheidend, welche üblicherweise in Form von Prallplatten ausgestaltet sind und welche, vorzugsweise verstellbar, an dem freien Ende eines jeweiligen, am Ende einer jeweiligen Förderleitung angeordneten Krümmers montierbar sind. Beispiele von solchen Prallplatten, welche sich in der Praxis bewährt haben, sind beispielsweise aus der EP 3 409 090 B1 oder der EP 0 244 712 B1 bekannt, wobei die Prallplatten im letztgenannten Fall mit im Wesentlichen warzenförmigen Erhebungen versehen sind, welche sich gleichmäßig über die Reflexionsfläche der Prallplatte erstrecken und dazu dienen, mehr oder minder unabhängig von der Aufprallgeschwindigkeit der Verteilgutpartikel für eine gleichmäßigere, spiegelsymmetrische Querverteilung zu sorgen.

Die DE 73 42 355 U beschreibt einen weiteren Prallkörper für pneumatische Verteilmaschinen, welcher eine von einer Stütze getragene Prallplatte aufweist, welche im Wesentlichen die Form eines von dem freien Ende einer jeweiligen Förderleitung um 90° nach unten gebogenen Trichters aufweist, dessen trichterförmig erweitertes Ende in Richtung des freien Endes der Förderleitung weist. An dem entgegengesetzten unteren Ende der trichterförmigen Prallplatte mündet diese in zwei unter einem kleinen Winkel zueinander angeordnete Prallflächen, deren glatten Plattenflächen die Form eines auf dem Kopf stehenden "V" besitzen und deren V-Schenkel an ihren freien unteren Enden nach außen in Richtung der Horizontalen abgewinkelt sind.

Indes ist die Verteilungsbreite der bislang bekannten Verteilorgane in Form von Prallplatten begrenzt, was zur

Folge hat, dass eine relativ große Anzahl an Verteilorganen und somit auch von entsprechenden Förderleitungen, Krümmern etc. erforderlich ist, was sich als aufwändig und teuer erweist und insbesondere bei Verteilmaschinen mit großer Arbeitsbreite mit einem erheblichen Mehrgewicht einhergeht.

Der Erfindung liegt die Aufgabe zugrunde, eine pneumatische Verteilmaschine der eingangs genannten Art sowie ein hierfür geeignetes Verteilorgan auf einfache und kostengünstige Weise dahingehend weiterzubilden, dass unter Gewährleistung einer gleichmäßigen Querverteilung des Verteilgutes die Verteilungsbreite eines jeweiligen Verteilorgans erhöht werden kann.

Erfindungsgemäß wird diese Aufgabe bei einer pneumatischen Verteilmaschine der eingangs genannten Art dadurch gelöst, dass der Prallkörper an zwei entgegengesetzten Seiten desselben jeweils einen konkaven Reflexionsflächenabschnitt aufweist, wobei die konkaven Reflexionsflächenabschnitte des Prallkörpers sowohl in entgegengesetzte Richtungen als auch von dem freien Ende einer jeweiligen Förderleitung fort divergieren und über einen an einer Stirnseite des Prallkörpers angeordneten Halbringreflexionsflächenabschnitt miteinander verbunden sind.

Zur Lösung dieser Aufgabe sieht die Erfindung bei einem für eine solche Verteilmaschine geeigneten Verteilorgan ferner vor, dass sein Prallkörper an zwei entgegengesetzten Seiten desselben jeweils einen konkaven Reflexionsflächenabschnitt aufweist, wobei die konkaven Reflexionsflächenabschnitte des Prallkörpers sowohl in entgegengesetzte Richtungen als auch von dem freien Ende einer jeweiligen Förderleitung fort divergieren und über einen an einer Stirnseite des Prallkörpers angeordneten Halbringreflexionsflächenabschnitt miteinander verbunden sind.

Die erfindungsgemäße Ausgestaltung des in Form eines Prallkörpers ausgestalteten Verteilorgans ermöglicht aufgrund der beiden an zwei entgegengesetzten Seiten des Prallkörpers angeordneten konkaven Reflexionsflächenabschnitte, welche sowohl in entgegengesetzte Richtungen als auch von dem freien Ende einer jeweiligen Förderleitung fort divergieren, eine Aufteilung der von einer jeweiligen Förderleitung auf die konkaven Reflexionsflächenabschnitte eines jeweiligen Prallkörpers auftreffenden Verteilgutpartikel in zwei entgegengesetzten Richtungen, so dass die Verteilgutpartikel sehr gleichmäßig in die beiden entgegengesetzten Richtungen eines jeweiligen Prallkörpers verteilt werden. Der Prallkörper ist dabei derart am freien Ende einer jeweiligen Förderleitung montierbar, dass seine beiden konkaven Reflexionsflächenabschnitte im Wesentlichen in entgegengesetzte Richtungen jeweils quer zur Fahrtrichtung der Verteilmaschine divergieren, so dass eine gegenüber dem Stand der Technik üblicher Prallplatten höhere Verteilungsbreite quer zur Fahrtrichtung erzielt werden kann, was wiederum zur Folge hat, dass eine geringere Anzahl an Prallkörpern sowie eine geringere Anzahl an Förderleitungen für die gesamte Arbeitsbreite der Verteilmaschine vonnöten ist. Für eine breitere Verteilung der Verteilgutpartikel von einem jeweiligen Prallkörper fort sorgt dabei insbesondere die konkave Ausgestaltung der Reflexionsflächenabschnitte, welche zugleich eine etwa gleichmäßig nach außen abnehmende Verteilmenge - d.h. ein im Wesentlichen dreieck- oder trapezförmiges Streubild - gewährleisten, so dass - z.B. ähnlich wie beim sogenannten Anschlussfahren von Zentrifugalstreumaschinen - eine über die gesamte Arbeitsbreite gleichmäßige Verteilung erreicht wird, indem die nach außen abnehmende Verteilmenge eines jeweiligen Prallkörpers jeweils durch die gleichfalls nach außen abnehmende Verteilmenge des benachbarten Prallkörpers kompensiert wird, indem sich deren Verteilungsbreiten teilweise überlappen. Je nach Form des von einem jeweiligen Prallkörper erzeugten Streubildes können die Prallkörper zu diesem Zweck z.B. in einem seitlichen Abstand voneinander angeordnet sein, welcher beispielsweise zwischen etwa 90% bis etwa 150% der gesamten Verteilungsbreite eines jeweiligen Prallkörpers entspricht. Die konkaven Reflexionsabschnitte des Prallkörpers weisen dabei insbesondere im Wesentlichen über ihre gesamte Erstreckung, d.h. von ihrer dem freien Ende einer jeweiligen Förderleitung nahen Seite bis hin zu ihrer dem freien Ende einer jeweiligen Förderleitung fernen Seite, eine Konkavität auf, deren Krümmungsradius - wie weiter unten noch näher erläutert - nicht notwendigerweise konstant sein muss.

Die konkaven Reflexionsflächenabschnitte des Prallkörpers sind erfindungsgemäß über einen an einer Stirnseite des Prallkörpers angeordneten Halbringreflexionsflächenabschnitt miteinander verbunden. Der Halbringreflexionsflächenabschnitt erstreckt sich zweckmäßigerweise um etwa 180° um den Umfang des Prallkörpers und verbindet auf diese Weise die beiden konkaven Reflexionsflächenabschnitte miteinander. Er dient vornehmlich zur Erzielung einer homogeneren Querverteilung der Verteilgutpartikel im zentralen Bereich des Prallkörpers, in welchem keine oder eine nur geringfügige Überlappung des Streubildes mit dem Streubild eines jeweils benachbarten Prallkörpers auftritt. Eine "Überlagerung" des einerseits von den beiden konkaven Reflexionsflächenabschnitten, andererseits von dem Halbringreflexionsflächenabschnitt erzeugten Streubildes führt somit zu einer maximalen Homogenität der Querverteilung, indem jeder Prallkörper ein etwa dreieck- oder trapezförmiges Streubild erzeugt, wobei der Halbringreflexionsflächenabschnitt eine homogene Verteilung im zentralen Bereich der Verteilungsbreite eines jeweiligen Prallkörpers und die beiden konkaven Reflexionsflächenabschnitt eine hiervon im Wesentlichen gleichmäßig abnehmende Verteilung in den Randbereichen der Verteilungsbreite eines jeweiligen Prallkörpers erzeugt, welche infolge Überlappung mit dem Randbereich der Verteilungsbreite eines jeweils benachbarten Prallkörpers eine in höchstem Maße homogene Querverteilung über die gesamten Arbeitsbreite der Verteilmaschine sicherstellt.

Die konkaven Reflexionsflächenabschnitte des Prallkörpers können vorzugsweise spiegelsymmetrisch zueinander angeordnet sein, um eine gleichmäßige Verteilung der hierauf auftreffenden Verteilgutpartikel in entgegengesetzte Richtungen quer zur Fahrtrichtung der Verteilmaschine zu gewährleisten.

In vorteilhafter Ausgestaltung kann vorgesehen sein, dass zwischen den einander zugewandten Enden der konkaven Reflexionsflächenabschnitte des Prallkörpers ein die konkaven Reflexionsflächenabschnitte miteinander verbindender Reflexionssteg angeordnet ist, welcher zweckmäßigerweise - insoweit weitgehend entsprechend einer herkömmlichen Prallplatte - eine im Wesentlichen ebene Reflexionsfläche aufweist, welche aber auch geringfügig, d.h. mit einem deutlich größeren Krümmungsradius als jener der beiden konkaven Reflexionsflächenabschnitte, konkav oder konvex gekrümmt sein kann. Der Reflexionssteg verhindert mit seiner im Wesentlichen ebenen Reflexionsfläche einerseits eine praktisch vollständige Aufteilung der von einer jeweiligen Förderleitung auf die beiden konkaven Reflexionsflächenabschnitte eines jeweiligen Prallkörpers auftreffenden Verteilgutpartikel in zwei entgegengesetzten Richtungen und sorgt auf diese Weise für eine homogene Querverteilung insbesondere im zentralen Bereich der Verteilungsbreite eines jeweiligen Prallkörpers, aber auch für eine homogenere Querverteilung über die gesamten Verteilungsbreite. Der Reflexionssteg dient ferner zur Generierung eines "Staupunktes" für den aus einer jeweiligen Förderleitung austretenden Luftförderstrom, so dass die mit dem Luftförderstrom transportierten Verteilgutpartikel eine größere Beschleunigung erfahren und aufgrund des auf diese Weise beschleunigten Luftförderstroms und des von der Förderleitung fort auftretenden Druckgradienten eine größere Beschleunigung zu beiden Seiten hin erfahren, nachdem sie mit höherer Geschwindigkeit auf die beiden konkaven Reflexionsflächenabschnitte des Prallkörpers aufgetroffen sind.

Die Breite des Reflexionssteges des Prallkörpers sollte dabei (deutlich) kleiner sein als der Querschnitt des freien Endes einer jeweiligen Förderleitung, wobei die Breite des Reflexionssteges höchstens etwa 50%, insbesondere höchstens etwa 40%, vorzugsweise höchstens etwa 30%, wie z.B. etwa 5% bis etwa 30%, höchst vorzugsweise etwa 10% bis etwa 25%, des Querschnittes des freien Endes einer jeweiligen Förderleitung betragen sollte.

Die konkaven Reflexionsflächenabschnitte des Prallkörpers können vorzugsweise an ihren einander zugewandten (inneren) Enden im Wesentlichen parallel zueinander angeordnet sein und von dort konkav nach außen divergieren. Im Falle eines Reflexionssteges der vorgenannten Art können sich die konkaven Reflexionsflächenabschnitte folglich an ihren einander zugewandten (inneren) Enden im Wesentlichen senkrecht zu dem Reflexionssteg angeordnet sein und von dort konkav nach außen von dem Reflexionssteg fort divergieren.

Die konkave Krümmung der konkaven Reflexionsflächenabschnitte des Prallkörpers erstreckt sich mit Vorteil über einen Winkel zwischen etwa 30° und etwa 100°, insbesondere zwischen etwa 45° und etwa 95°, vorzugsweise zwischen etwa 60° und etwa 90°, um für eine breite Reflexion der Verteilgutpartikel in jeweils entgegengesetzte Querrichtungen des Prallkörpers zu sorgen.

Während die konkave Krümmung der konkaven Reflexionsflächenabschnitte des Prallkörpers grundsätzlich auch einen im Wesentlichen konstanten Krümmungsradius besitzen kann, kann sie in vorteilhafter Ausgestaltung im Wesentlichen parabelförmig ausgestaltet sein, wobei der Krümmungsradius insbesondere von innen (d.h. von den einander zugewandten Seiten der beiden konkaven Reflexionsflächenabschnitte) nach außen (d.h. zu den einander abgewandten Seiten der beiden konkaven Reflexionsflächenabschnitte) zunehmen kann, d.h. die Konkavität nimmt von innen nach außen ab.

Der Halbringflächenreflexionsabschnitt des Prallkörpers geht vorzugsweise stetig differenzierbar in einen jeweiligen konkaven Reflexionsflächenabschnitt über, d.h. der Übergangsbereich zwischen dem Halbringreflexionsflächenabschnitt und den beiden konkaven Reflexionsflächenabschnitte ist im Wesentlichen frei von Kanten oder Stufen. Entsprechendes gilt zweckmäßigerweise für den Halbringreflexionsflächenabschnitt selbst.

Der Halbringflächenreflexionsabschnitt des Prallkörpers divergiert seinerseits vorteilhafterweise von dem freien Ende einer jeweiligen Förderleitung fort, um praktisch alle Verteilgutpartikel, welche nicht auf die konkaven Reflexionsflächenabschnitte aufgetroffen und von dort zu Seite hin verteilt worden sind, im zentralen Bereich der Verteilungsbreite des Prallkörpers zu verteilen.

Hinsichtlich einer höchst gleichmäßigen Verteilung der Verteilgutpartikel im zentralen Bereich der Verteilungsbreite des Prallkörpers ist dessen Halbringreflexionsflächenabschnitt ferner vorzugsweise zumindest in seinem stirnseitigen, zentralen Bereich konvex gekrümmt, wobei die konvexe Krümmung geringer ausgeprägt sein kann als die konkave Krümmung der beiden konkaven Reflexionsflächenabschnitte, d.h. der konvexe Krümmungsradius des Halbringreflexionsflächenabschnittes kann größer sein als der oder die konkave(n) Krümmungsradius/-radien der konkaven Reflexionsflächenabschnitte.

Während die konkaven Reflexionsflächenabschnitte und gegebenenfalls der Halbringreflexionsflächenabschnitt des Prallkörpers beispielsweise auf einer Grundplatte festgelegt sein können, kann der Prallkörper ferner insbesondere eine Montageplatte aufweisen an welcher die konkaven Reflexionsflächenabschnitte und gegebenenfalls der Reflexionssteg festgelegt sind. Wie als solches aus dem Stand der Technik bekannt, ist letztere darüber hinaus mit einer Befestigungseinrichtung versehen, um den Prallkörper in als solcher üblichen Weise, insbesondere lösbar, an dem freien Ende einer jeweiligen Förderleitung der Verteilmaschine montieren zu können.

Die Montageplatte des Prallkörpers kann vorteilhafterweise unter einem Winkel von größer etwa 90° und kleiner etwa 150° in Bezug auf die Grundplatte angeordnet sein, so dass der Prallkörper im montierten Zustand insgesamt schräg in Bezug auf den Austrittsquerschnitt einer jeweiligen Förderleitung angeordnet ist, wie dies auch bei herkömmlichen Prallplatten gemäß dem Stand der Technik üblich ist.

Gemäß einer vorteilhaften Weiterbildung kann ferner vorgesehen sein, dass die konkaven Reflexionsflächenabschnitte und/oder der Halbringreflexionsflächenabschnitt des Prallkörpers mit einer Mehrzahl an warzenförmigen, insbesondere im Wesentlichen gleichmäßig verteilten, Erhebungen versehen sind. Die im Wesentlichen warzenförmigen Erhebungen können dabei beispielsweise eine etwa längliche bzw. ovale oder etwa tropfenförmige Gestalt besitzen und z.B. mit unterschiedlichen Grundflächen und/oder Höhen vorgesehen sein. Sie können grundsätzlich im Wesentlichen entsprechend der eingangs zitierten EP 0 244 712 B1 ausgestaltet sein.

Wie bereits erwähnt, kann der erfindungsgemäße Prallkörper grundsätzlich an dem freien Ende eines endständigen Krümmers einer jeweiligen Förderleitung montiert sein, dessen Krümmung sich insbesondere im Wesentlichen um 90° erstreckt, sei es beispielsweise nach unten oder sei es insbesondere - in Fahrtrichtung der Verteilmaschine betrachtet - nach hinten, d.h. der Krümmer erstreckt sich etwa horizontal und entgegen der Fahrtrichtung nach hinten.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1:: eine schematische Frontansicht eines Ausführungsbeispiels einer pneumatischen Verteilmaschine;
- Fig. 2: eine schematische, abgebrochen wiedergegeben Ansicht eines rechten Auslegers der Verteilmaschine gemäß der Fig. 1, welcher eine Mehrzahl an Förleitungen trägt, welche in je ein Verteilorgan münden;
- Fig. 3: eine schematische Seitenansicht eines Ausführungsbeispiels eines erfindungsgemäßen Verteilorgans in Form eines Prallkörpers;
- Fig. 4: eine schematische perspektivische Ansicht des Prallkörpers gemäß der Fig. 3;
- Fig. 5: eine schematische Frontansicht des Prallkörpers gemäß den Fig. 3 und 4;
- Fig. 6: eine der Fig. 3 entsprechende schematische Seitenansicht des Prallkörpers gemäß den Fig. 3 bis 6, nachdem er am freien Ende einer Förderleitung montiert worden ist, in einer ersten Montageposition;
- Fig. 7: eine der Fig. 3 entsprechende schematische Sei- tenansicht des Prallkörpers gemäß den Fig. 3 bis 6, nachdem er am freien Ende einer Förderleitung montiert worden ist, in einer zweiten Montageposition; und
- Fig. 8: ein mittels eines Prallkörpers gemäß den Fig. 3 bis 7 erzeugtes dreidimensionales Streubild.

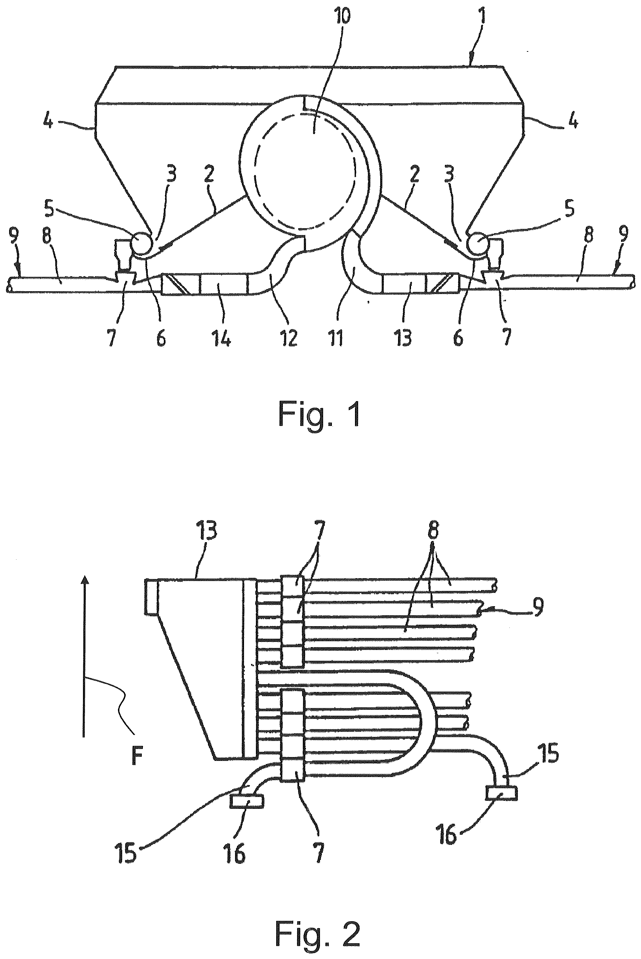

In der Fig. 1 ist eine Ausführungsform einer pneumatischen Verteilmaschine in stark schematisierter Weise wiedergegeben, wobei es sich bei der Verteilmaschine beispielsweise um einen pneumatischen Düngerstreuer handeln kann, welcher zum Verteilen von pulver- bzw. partikelförmigem Verteilgut in Form von Dünger dient. Die Verteilmaschine kann als Anbaugerät ausgestaltet sein, welche mit dem Dreipunkt-Kraftheber einer Zugmaschine, wie eines Traktors, gekoppelt werden kann, oder sie kann in schwerer Bauart auf einen achsgestützten Nachläufer oder einen Selbstfahrer aufgesetzt sein. Sie weist einen von einem zeichnerisch nicht dargestellten Rahmen getragenen Vorratsbehälter 1 auf, dessen Bodenflächen 2 und Seitenwände 4 im unteren Bereich einerseits zueinander, andererseits zu je Auslauföffnung 3 konvergieren. Einer jeweiligen Auslauföffnung 3 des Vorratsbehälters 1 ist ein Dosierorgan 5 zugeordnet, welches eine steuer- und/oder regelbar drehangetriebene Dosierwalze, z.B. in Form von Nockenrädern, umfasst und beispielsweise von Leitblechen 6 unterfangen sein kann. Unterhalb der Dosierorgane 5 befinden sich Übergabekammern 7, welche in je eine Förderleitung 8 münden. Letztere erstrecken sich in Form von Rohrbündeln 9 entlang von Auslegern quer zur Fahrtrichtung F der Verteilmaschine zu beiden Seiten deren Längsachse (vgl. auch die Fig. 2).

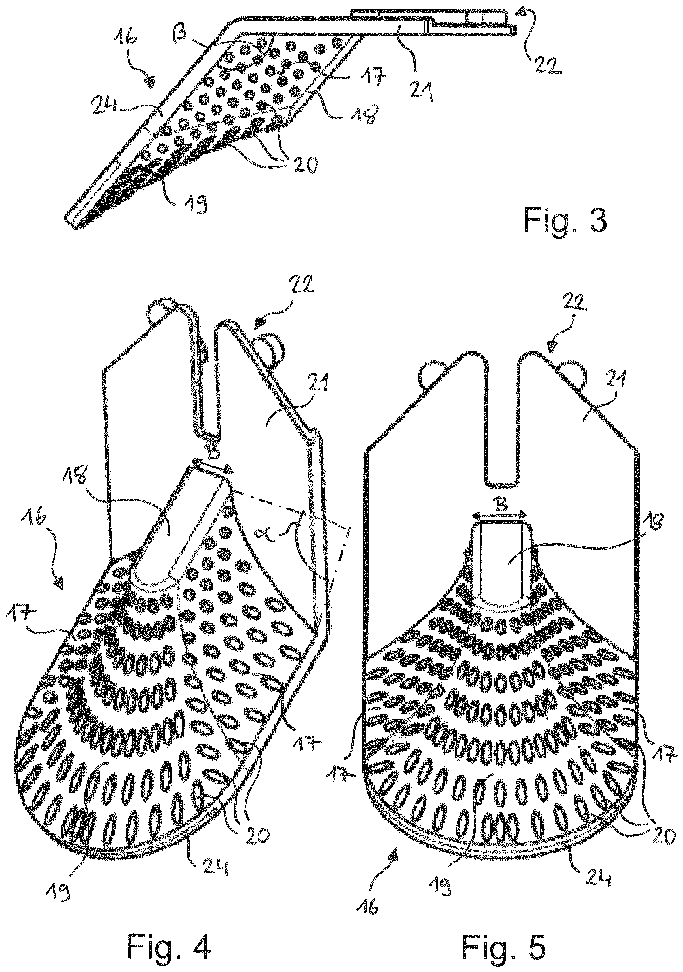

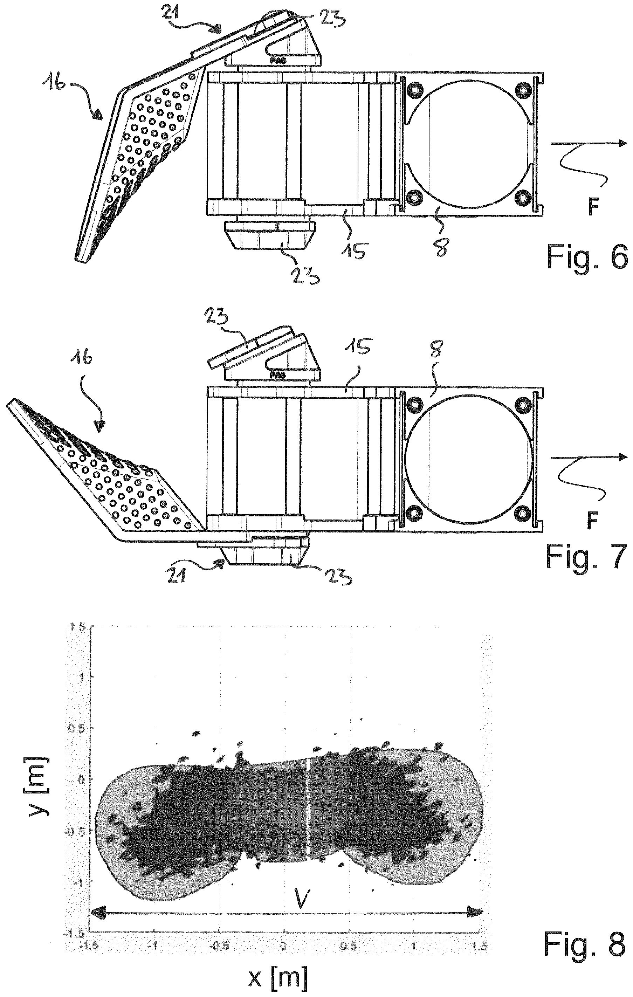

An der Frontseite des Vorratsbehälters 1 ist ein Gebläse 10 angeordnet, dessen druckseitigen Abgänge 11, 12 an je einen Verteilerkasten 13, 14 angeschlossen sind. Von dort wird die Druckluft auf die einzelnen Förderleitungen 8 aufgeteilt. Sie durchströmt die Übergabekammern 7, in welchen das Verteilgut dem Druckluftstrom zugeführt, beschleunigt und pneumatisch an weiter unten unter Bezugnahme auf die Fig. 3 bis 5 näher erläuterte Verteilorgane überführt wird. Die Übergabekammern 7 können in als solcher bekannten Weise mit einem Injektor nach Art einer Düse und einem diesem nachgeordneten Diffusor (nicht gezeigt) versehen sein. Wie insbesondere der Fig. 2 zu entnehmen ist, enden die Förderleitungen 8 in unterschiedlichem Abstand von der Längsachse der Verteilmaschine in Krümmern 15, welche sich um einen Winkel von etwa 90° erstrecken und bei dem vorliegenden Ausführungsbeispiel - in Fahrtrichtung F der Verteilmaschine betrachtet - nach hinten weisen, aber z.B. auch nach unten weisen können (nicht gezeigt). Die Krümmer 15 können dabei insbesondere entsprechend der eingangs zitierten EP 0 277 288 B1 ausgestaltet sein. Unmittelbar stromab der Abgabeöffnung einer jeweiligen Förderleitung 8 - oder genauer: eines jeweiligen Krümmer 15 derselben - ist je ein Verteilorgan angeordnet, bei welchem es sich um einen insgesamt mit dem Bezugszeichen 16 versehenen Prallkörper handelt, welcher in der Fig. 2 lediglich durch ein Rechteck symbolisiert und von welchem in den Fig. 3 bis 5 ein Ausführungsbeispiel wiedergegeben ist, während die Fig. 6 und 7 denselben Prallkörper 16 in unterschiedlichen Montagepositionen an dem Krümmer 15 der Förderleitung 8 zeigen.

Wie aus den Fig. 3 bis 5 hervorgeht, weist der Prallkörper 16 an zwei entgegengesetzten Seiten desselben jeweils einen konkaven Reflexionsflächenabschnitt 17 aufweist, wobei die konkaven Reflexionsflächenabschnitte 17 spiegelsymmetrisch zueinander angeordnet sind und sowohl in entgegengesetzte Richtungen als auch von dem freien Ende einer jeweiligen Förderleitung 8 fort divergieren (vgl. die Fig. 6 und 7), d.h. die konkaven Reflexionsflächenabschnitte 17 erweitern sich jeweils konkav einerseits voneinander, andererseits von einer jeweiligen Förderleitung 8 fort. Die konkaven Reflexionsabschnitte 17 des Prallkörpers 16 sind dabei praktisch über ihre gesamte Erstreckung, d.h. von ihrer dem freien Ende einer jeweiligen Förderleitung 8 nahen Seite (in den Fig. 4 und 5 oben) bis hin zu ihrer dem freien Ende einer jeweiligen Förderleitung fernen Seite (in den Fig. 4 und 5 unten), konkav gewölbt. Zwischen den - in den Fig. 4 und 5 oberen - einander zugewandten Enden der konkaven Reflexionsflächenabschnitte 17 des Prallkörpers 16 befindet sich ein die beiden konkaven Reflexionsflächenabschnitte 16 miteinander verbindender Reflexionssteg 18, welcher eine mehr oder minder ebene bzw. planare Reflexionsfläche besitzt und dessen Breite B kleiner ist als der Querschnitt des freien Endes einer jeweiligen Förderleitung 8 - oder genauer: deren endständigen Krümmers 15 (vgl. auch die Fig. 6 und 7) -, wobei die Breite B des Reflexionssteges 18 beispielsweise etwa 15% bis etwa 20% des Querschnittes des endständigen Krümmers 15 der Förderleitung 8 betragen kann. Die konkaven Reflexionsflächenabschnitte 17 des Prallkörpers 16 erstrecken sich an ihren einander zugewandten Enden einerseits im Wesentlichen parallel zueinander, andererseits im Wesentlichen senkrecht von dem Reflexionssteg 18 fort, wobei sie infolge ihrer konkaven Krümmung zu beiden Seiten von dem Reflexionssteg 18 fort divergieren. Die konkave Krümmung der konkaven Reflexionsflächenabschnitte 17 kann sich hierbei z.B. über einen Winkel α zwischen etwa 60° und etwa 100° erstrecken (vgl. die Fig. 4), wobei sie einen im Wesentlichen konstanten Krümmungsradius aufweisen oder insbesondere einen sich nach außen von dem Reflexionssteg 18 fort vergrößernden Krümmungsradius besitzen kann, so dass sich eine im Wesentlichen parabelförmige Ausgestaltung der konkaven Reflexionsflächenabschnitte 17 ergibt.

An einer - in den Fig. 4 und 5 vorderen - Stirnseite des Prallkörpers 16 sind die beiden konkaven Reflexionsflächenabschnitte 17 über einen Halbringreflexionsflächenabschnitt 19 derart miteinander verbunden, dass der Halbringflächenreflexionsabschnitt 19 unter Vermeidung von Stufen oder Kanten, d.h. im mathematischen Sinne stetig und differenzierbar, in einen jeweiligen konkaven Reflexionsflächenabschnitt 17 übergeht. Der Halbringflächenreflexionsabschnitt 19 des Prallkörpers 16 divergiert dabei seinerseits von dem Reflexionssteg 18 bzw. von dem freien Ende einer jeweiligen Förderleitung 8 fort, wobei der Halbringreflexionsflächenabschnitt 19 des Prallkörpers 16 zumindest in seinem stirnseitigen, zentralen Bereich konvex gekrümmt ist. Die konvexe Krümmung des Halbringreflexionsflächenabschnittes 19 erstreckt sich hierbei vornehmlich parallel zu der konkaven Krümmung der beiden konkaven Reflexionsflächenabschnitte 17, d.h. die Höhe des Halbringreflexionsabschnittes 19 nimmt von seinem zentralen Bereich in Richtung seiner seitlichen Ränder (d.h. in Querrichtung, senkrecht zur Fahrtrichtung F der Verteilmaschine) in zunehmendem Maße ab, so dass sich eine konvexe Krümmung ergibt, wohingegen die Höhe der beiden konkaven Reflexionsflächenabschnitte 17 von ihrem dem Reflexionssteg 18 zugewandten Ende in Richtung der seitlichen Ränder (d.h. in Querrichtung, senkrecht zur Fahrtrichtung F der Verteilmaschine) in abnehmendem Maße abnimmt, so dass sich eine konkave Krümmung ergibt. Die aus den beiden konkaven Reflexionsflächenabschnitten 17, der ebenen Reflexionsfläche des Reflexionssteges 18 und dem Halbringflächenreflexionsabschnitt 19 gebildete Gesamtreflexionsfläche des Prallkörpers 16 ähnelt somit etwa einem Schuh, welcher im Bereich des Innen- und Außenristes die konkaven Reflexionsflächenabschnitte 17 und im Bereich des Spanns und der Kappe den, insbesondere konvexen, Halbringreflexionsflächenabschnitt 19 umfasst, während die Einstiegsöffnung von der ebenen Reflexionsfläche des Reflexionssteges 18 gebildet ist.

Sowohl die konkaven Reflexionsflächenabschnitte 17 als auch der Halbringreflexionsflächenabschnitt 19 des Prallkörpers 16 sind bei dem vorliegenden Ausführungsbeispiel mit einer Mehrzahl an warzenförmigen, im Wesentlichen gleichmäßig verteilten Erhebungen 20 ausgestattet, welche eine etwa längliche bzw. ovale Gestalt besitzen, aber beispielsweise auch etwa tropfenförmig ausgestaltet sein können (nicht gezeigt). Die warzenförmigen Erhebungen 20 können dabei mit unterschiedlichen Grundflächen und/oder Höhen vorgesehen sein und insbesondere im Wesentlichen jenen der eingangs zitierten EP 0 244 712 B1 entsprechen.

Der Prallkörper 16 weist ferner eine Montageplatte 21 auf, an welcher die Schmalseiten der konkaven Reflexionsflächenabschnitte 17 und des Reflexionssteges 18 festgelegt sind. An ihrem den konkaven Reflexionsabschnitten 17 abgewandten, in den Fig. 3 bis 6 oberen, freien Ende ist die Montageplatte 21 mit einer Befestigungseinrichtung 22 versehen, welche zur lösbaren Befestigung des Prallkörpers 16 an dem freien Ende einer jeweiligen Förderleitung 8 - oder genauer: an einem jeweiligen endständigen Krümmer 15 einer jeweiligen Förderleitung 8 - der Verteilmaschine dient. Während die Befestigungseinrichtung 16 grundsätzlich in beliebiger bekannter Weise ausgestaltet sein kann, umfasst sie im vorliegenden Fall einerseits einen zentralen Schlitz, welcher in einen hierzu komplementären Führungs- und Befestigungsvorsprung 23 eines Befestigungsmittels der Förderleitung 8 bzw. deren Krümmer 15 einführbar ist (vgl. hierzu die Fig. 6 und 7), andererseits zwei, z.B. federbelastete Klemmbacken, welche zur einfachen und vorzugsweise werkzeugfreien, kraftschlüssig klemmenden Montage des Prallkörpers 16 an dem Befestigungsmittel der Förderleitung 8 bzw. deren Krümmer 15 dienen. Die konkaven Reflexionsflächenabschnitte 17 und der Halbringreflexionsflächenabschnitt 19 des Prallkörpers 16 können ferner auf einer Grundplatte 24 festgelegt sein, welche insbesondere unter einem Winkel β größer etwa 90° und kleiner etwa 150°, im vorliegenden Fall z.B. unter einem Winkel β von etwa 130°, in Bezug auf die Grundplatte 24 angeordnet ist (vgl. insbesondere die Fig. 3).

Wie sich aus den Fig. 6 und 7 ergibt, kann der Prallkörper 16 mittels der Befestigungseinrichtung 22 seiner Montageplatte 21 an den entsprechenden Führungs- und Befestigungsvorsprüngen 23 an dem freien Ende des endständigen Krümmers 15 einer jeweiligen Förderleitung 8 montiert werden, wobei sich der Krümmer 15 der Förderleitung 8 im vorliegenden Fall um einen Winkel von etwa 90° entgegen der Fahrtrichtung F der Verteilmaschine erstreckt. Im Falle der in der Fig. 6 wiedergegebenen Situation ist der Prallkörper 16 an einem oberen Führungs- und Befestigungsvorsprung 23 des Krümmers 15 montiert worden, welcher z.B. unter einem Winkel von etwa 30° in Bezug auf die Horizontale geneigt angeordnet ist. Dies erweist sich insbesondere für die Normal- oder Frühdüngung als zweckmäßig, wobei die aus dem freien Ende des Krümmers 15 nach hinten (d.h. entgegen der Fahrtrichtung F) mittels des Prallkörpers 16 schräg nach unten reflektiert werden. Im Falle der in der Fig. 7 wiedergegebenen Situation ist der Prallkörper 16 an einem unteren Führungs- und Befestigungsvorsprung 23 des Krümmers 15 montiert worden, welcher z.B. im Wesentlichen horizontal angeordnet ist, so dass der Prallkörper 16 unter einem flacheren Winkel gegen den endständigen Querschnitt des Krümmers 15 angestellt ist als dies bei der Fig. 6 der Fall ist. Dies erweist sich insbesondere für die Spätdüngung als zweckmäßig, bei welcher die angebauten Pflanzen bereits stark angewachsen sein können, wobei die aus dem freien Ende des Krümmers 15 der Förderleitung 8 nach hinten (d.h. entgegen der Fahrtrichtung F) mittels des Prallkörpers 16 schräg nach oben reflektiert werden.

Der Vollständigkeit halber sei an dieser Stelle erwähnt, dass der Prallkörper 16 in einer z.B. der Fig. 6 entsprechenden Weise an dem Krümmer 15 der Förderleitung 8 montierbar sein kann, sofern sich der Krümmer 15 nicht nach in Fahrtrichtung F nach hinten, sondern beispielsweise nach unten erstreckt (nicht gezeigt), wie dies insbesondere bei achsgestützten oder selbstfahrenden Verteilmaschinen der Fall sein kann, deren die Prallkörper 16 tragenden Ausleger auf ein hinreichendes Höhenniveau angehoben werden können, um auch bei der Spätdüngung (deutlich) oberhalb der kultivierten Pflanzen angeordnet zu sein.

In der Fig. 8 ist schließlich ein dreidimensionales Streubild wiedergegeben, wie es mittels des Prallkörpers 16 gemäß den obigen Fig. 3 bis 5 erhalten worden ist, wenn dieser entsprechend der Fig. 6 zum Zwecke der Normaldüngung an den endständigen Krümmer 15 einer Förderleitung 8 montiert worden ist. Zu diesem Zweck wurde der Prallkörper 16 über die Verteilerleitung 8 und den Krümmer 15 mit Verteilgut versorgt, wobei die von dem Prallkörper 16 reflektierten Verteilgutpartikel in einer Vielzahl an Auffangschalen aufgefangen worden sind, um die Verteilmenge pro Flächeneinheit innerhalb der gesamten Verteilungsbreite V des Prallkörpers zu ermitteln.

Man erkennt in der Fig. 8 einen zentralen grauen Bereich (hier: zwischen etwa -0,5 m und etwa 0,5 m in Querrichtung x, d.h. senkrecht zu der sich in y-Richtung erstreckenden Fahrtrichtung F) mit einer weitgehend gleichmäßigen Verteilmenge. Von dem zentralen grauen Bereich nach außen (wiederum in Querrichtung x, d.h. senkrecht zu der sich in y-Richtung erstreckenden Fahrtrichtung F) erkennt man eine kontinuierliche Abnahme der Verteilmenge bis zu den äußeren Grenzen der Verteilungsbreite V (hier: zwischen etwa -0,5 m und -1,5 m bzw. zwischen etwa 0,5 m und 1,5 m). Betrachtet man die Verteilmenge in Querrichtung x, so ergibt sich demnach ein sehr breites, im Wesentlichen dreieckförmiges zweidimensionales Streubild mit einer etwa linearen Abnahme der Verteilgutmenge in Richtung der äußeren Grenzen der Verteilungsbreite V. Der seitliche Abstand einer Mehrzahl an Prallkörpern 16 entlang den Auslegern der Verteilmaschine kann folglich größer gewählt werden als beim Stand der Technik üblicher Prallteller, wobei dieser Abstand beispielsweise etwa der Verteilungsbreite V eines jeweiligen Prallkörpers 16 betragen kann, um infolge Überlappung der Streubilder benachbarter Prallkörper 16 für eine konstante Verteilung über die gesamte Arbeitsbreite der Verteilmaschine zu sorgen.

## Patentansprüche

1. Pneumatische Verteilmaschine zum Ausbringen von Verteilgut, umfassend
- wenigstens einen von einem Rahmen getragenen Vorratsbehälter (1) mit wenigstens einer Auslauföffnung (3);
- wenigstens ein der Auslauföffnung (3) des Vorratsbehälters (1) nachgeordnetes Dosierorgan (5) mit einer rotierbar angetriebenen Dosierwalze zur Dosierung des Verteilgutes;
- wenigstens eine dem Dosierorgan (3) nachgeordnete Übergabekammer (7), welche einerseits mit wenigstens einem Gebläse (10) in Verbindung steht und welche andererseits in je eine Förderleitung (8) mündet, um das von dem Dosierorgan (5) dosierte Verteilgut pneumatisch an je ein Verteilorgan zu überführen, welche mit seitlichem Abstand von der Längsachse der Verteilmaschine angeordnet sind,
wobei die Verteilorgane jeweils einen, an dem freien Ende einer jeweiligen Förderleitung (8) montierbaren Prallkörper (16) aufweisen, **dadurch gekennzeichnet, dass** der Prallkörper (16) an zwei entgegengesetzten Seiten desselben jeweils einen konkaven Reflexionsflächenabschnitt (17) aufweist, wobei die konkaven Reflexionsflächenabschnitte (17) des Prallkörpers (16) sowohl in entgegengesetzte Richtungen als auch von dem freien Ende einer jeweiligen Förderleitung (8) fort divergieren und über einen an einer Stirnseite des Prallkörpers (16) angeordneten Halbringreflexionsflächenabschnitt (19) miteinander verbunden sind.

2. Verteilmaschine nach Anspruch 1, **dadurch gekennzeichnet, dass** die konkaven Reflexionsflächenabschnitte (17) des Prallkörpers (16) spiegelsymmetrisch zueinander angeordnet sind.

3. Verteilmaschine nach Anspruch 1 oder 2, **dadurch gekennzeichnet, dass** zwischen den einander zugewandten Enden der konkaven Reflexionsflächenabschnitte (17) des Prallkörpers (16) ein die konkaven Reflexionsflächenabschnitte (17) miteinander verbindender Reflexionssteg (18) angeordnet ist, wobei die Breite des Reflexionssteges (18) des Prallkörpers (16) insbesondere kleiner ist als der Querschnitt des freien Endes einer jeweiligen Förderleitung (8).

4. Verteilmaschine nach einem der Ansprüche 1 bis 3, **dadurch gekennzeichnet, dass** die konkaven Reflexionsflächenabschnitte (17) des Prallkörpers (16) an ihren einander zugewandten Enden im Wesentlichen parallel zueinander angeordnet sind.

5. Verteilmaschine nach Anspruch 1 oder 4, **dadurch gekennzeichnet, dass** sich die konkave Krümmung der konkaven Reflexionsflächenabschnitte (17) des Prallkörpers (16) über einen Winkel zwischen 30° und 100°, insbesondere zwischen 45° und 95°, vorzugsweise zwischen 60° und 90°, erstreckt.

6. Verteilmaschine nach einem der Ansprüche 1 bis 5, **dadurch gekennzeichnet, dass** die konkave Krümmung der konkaven Reflexionsflächenabschnitte (17) des Prallkörpers (16) im Wesentlichen parabelförmig ausgestaltet ist.

7. Verteilmaschine nach einem der Ansprüche 1 bis 6, **dadurch gekennzeichnet, dass** der Halbringflächenreflexionsabschnitt (19) des Prallkörpers (16)
- stetig differenzierbar in einen jeweiligen konkaven Reflexionsflächenabschnitt (17) übergeht; und/oder
- seinerseits von dem freien Ende einer jeweiligen Förderleitung (8) fort divergiert; und/oder
- zumindest in seinem stirnseitigen, zentralen Bereich konvex gekrümmt ist.

8. Verteilmaschine nach einem der Ansprüche 1 bis 7, **dadurch gekennzeichnet, dass** die konkaven Reflexionsflächenabschnitte (17) und gegebenenfalls der Halbringreflexionsflächenabschnitt (19) des Prallkörpers (16) auf einer Grundplatte (24) festgelegt sind.

9. Verteilmaschine nach einem der Ansprüche 1 bis 8, **dadurch gekennzeichnet, dass** der Prallkörper (16) eine Montageplatte (21) aufweist, an welcher die konkaven Reflexionsflächenabschnitte (17) und gegebenenfalls der Reflexionssteg (18) festgelegt sind.

10. Verteilmaschine nach Anspruch 8 und 9, **dadurch gekennzeichnet, dass** die Montageplatte (21) des Prallkörpers (16) unter einem Winkel von größer 90° und kleiner 150° in Bezug auf die Grundplatte (24) angeordnet ist.

11. Verteilmaschine nach einem der Ansprüche 1 bis 10, **dadurch gekennzeichnet, dass** die konkaven Reflexionsflächenabschnitte (17) und/oder der Halbringreflexionsflächenabschnitt (19) des Prallkörpers (16) mit einer Mehrzahl an warzenförmigen, insbesondere im Wesentlichen gleichmäßig verteilten, Erhebungen (20) versehen sind.

12. Verteilmaschine nach einem der Ansprüche 1 bis 11, **dadurch gekennzeichnet, dass** der Prallkörper (16) an dem freien Ende eines endständigen Krümmers (15) einer jeweiligen Förderleitung (8) montiert ist, dessen Krümmung sich insbesondere im Wesentlichen um 90° erstreckt.

13. Verteilorgan, welches für eine Verteilmaschine gemäß dem Oberbegriff des Anspruchs 1 geeignet ist, wobei das Verteilorgan einen, an dem freien Ende einer jeweiligen Förderleitung (8) der Verteilmaschine montierbaren Prallkörper (16) aufweist, **dadurch gekennzeichnet, dass** der Prallkörper (16) die kennzeichnenden Merkmale des Anspruchs 1 aufweist.

14. Verteilorgan nach Anspruch 13, **gekennzeichnet durch** die Merkmale wenigstens eines der Ansprüche 2 bis 11.

## Claims

1. Pneumatic distribution machine for applying distribution material, comprising
- at least one storage container (1) which is supported by a frame and has at least one outlet opening (3);
- at least one metering element (5) which is arranged downstream of the outlet opening (3) of the storage container (1) and has a rotatably driven metering roller for metering the distribution material;
- at least one transfer chamber (7) which is arranged downstream of the metering element (3) and is connected to at least one fan (10) on the one hand and opens into a respective conveying line (8) on the other hand, in order to pneumatically transfer the distribution material metered by the metering element (5) to a respective distribution element, which are arranged at a lateral distance from the longitudinal axis of the distribution machine,
the distribution elements each having a deflection body (16) which can be mounted at the free end of a respective conveying line (8), **characterized in that** the deflection body (16) has a concave reflective surface portion (17) on each of two opposite sides thereof, the concave reflective surface portions (17) of the deflection body (16) diverging in opposite directions and also away from the free end of a respective conveying line (8), and being connected to each other by means of a half-ring reflective surface portion (19) arranged on an face side of the deflection body (16).

2. Distribution machine according to claim 1, **characterized in that** the concave reflective surface portions (17) of the deflection body (16) are arranged in a mirror-symmetrical manner relative to each other.

3. Distribution machine according to claim 1 or claim 2, **characterized in that** a reflective rib (18) connecting the concave reflective surface portions (17) to one another is arranged between the mutually facing ends of the concave reflective surface portions (17) of the deflection body (16), the width of the reflective rib (18) of the deflection body (16) being in particular smaller than the cross-section of the free end of a relevant conveying line (8).

4. Distribution machine according to any of claims 1 to 3, **characterized in that** the concave reflective surface portions (17) of the deflection body (16) are arranged substantially parallel to each other at their mutually facing ends.

5. Distribution machine according to claim 1 or claim 4, **characterized in that** the concave curvature of the concave reflective surface portions (17) of the deflection body (16) extends over an angle between 30° and 100°, in particular between 45° and 95°, preferably between 60° and 90°.

6. Distribution machine according to any of claims 1 to 5, **characterized in that** the concave curvature of the concave reflective surface portions (17) of the deflection body (16) is substantially parabolic.

7. Distribution machine according to any of claims 1 to 6, **characterized inthat** the half-ring surface reflective portion (19) of the deflection body (16)
- transitions in a continuously differentiable manner into a respective concave reflective surface portion (17); and/or
- diverges away from the free end of a respective conveying line (8); and/or
- is convexly curved at least in its frontal central region.

8. Distribution machine according to any of claims 1 to 7, **characterized in that** the concave reflective surface portions (17) and, optionally, the half-ring reflective surface portion (19) of the deflection body (16) are fixed on a base plate (24).

9. Distribution machine according to any of claims 1 to 8, **characterized in that** the deflection body (16) has a mounting plate (21) on which the concave reflective surface portions (17) and, optionally, the reflective rib (18) are fixed.

10. Distribution machine according to claim 8 and claim 9, **characterized in that** the mounting plate (21) of the deflection body (16) is arranged at an angle of greater than 90° and less than 150° with respect to the base plate (24).

11. Distribution machine according to any of claims 1 to 10, **characterized in that** the concave reflective surface portions (17) and/or the half-ring reflective surface portion (19) of the deflection body (16) are provided with a plurality of nodular, in particular substantially uniformly distributed, elevations (20).

12. Distribution machine according to any of claims 1 to 11, **characterized in that** the deflection body (16) is mounted at the free end of a terminal bend (15) of a respective conveying line (8), the curvature of which terminal bend extends in particular substantially through 90°.

13. Distribution element suitable for a distribution machine according to the preamble of claim 1, the distribution element comprising a deflection body (16) which can be mounted at the free end of a relevant conveying line (8) of the distribution machine, **characterized in that** the deflection body (16) comprises the characterizing features of claim 1.

14. Distribution element according to claim 13, **characterized by** the features of at least one of claims 2 to 11.

## Revendications

1. Machine d'épandage pneumatique pour la distribution d'un matériau d'épandage, comprenant
- au moins un réservoir de réserve (1) supporté par un cadre et comportant au moins une ouverture de sortie (3) ;
- au moins un organe de dosage (5) disposé en aval de l'ouverture de sortie (3) du réservoir de réserve (1) et comportant un rouleau de dosage entraîné en rotation pour le dosage du matériau d'épandage ;
- au moins une chambre de transfert (7) disposée en aval de l'organe de dosage (3), laquelle chambre de transfert est, d'une part, en liaison avec au moins une soufflante (10) et, d'autre part, débouche respectivement dans une conduite d'alimentation (8) pour transférer pneumatiquement le matériau d'épandage dosé par l'organe de dosage (5) respectivement à un organe d'épandage, qui sont disposés à une distance latérale de l'axe longitudinal de la machine d'épandage,
dans laquelle les organes d'épandage comportent respectivement un corps d'impact (16) pouvant être monté sur l'extrémité libre d'une conduite de transport (8) respective, **caractérisée en ce que** le corps d'impact (16) présente, sur deux côtés opposés de celui-ci, respectivement une section de surface réfléchissante (17) concave, dans laquelle les sections de surface réfléchissante (17) concaves du corps d'impact (16) divergent à la fois dans des directions opposées et en s'éloignant de l'extrémité libre d'une conduite de transport (8) respective, et sont reliées entre elles par l'intermédiaire d'une section de surface réfléchissante semi-annulaire (19) disposée sur une face frontale du corps d'impact (16).

2. Machine d'épandage selon la revendication 1, **caractérisée en ce que** les sections de surface réfléchissante (17) concaves du corps d'impact (16) sont disposées avec une symétrie spéculaire les unes par rapport aux autres.

3. Machine d'épandage selon la revendication 1 ou 2, **caractérisée en ce que,** entre les extrémités tournées l'une vers l'autre des sections de surface réfléchissante (17) concaves du corps d'impact (16), est disposée une traverse réfléchissante (18) reliant entre elles les sections de surface réfléchissante (17) concaves, dans laquelle la largeur de la traverse réfléchissante (18) du corps d'impact (16) est en particulier inférieure à la section transversale de l'extrémité libre d'une conduite de transport (8) respective.

4. Machine d'épandage selon l'une des revendications 1 à 3, **caractérisée en ce que** les sections de surface réfléchissante (17) concaves du corps d'impact (16) sont disposées sensiblement parallèlement les unes aux autres au niveau de leurs extrémités se faisant face.

5. Machine d'épandage selon la revendication 1 ou 4, **caractérisée en ce que** la courbure concave des sections de surface réfléchissante (17) concaves du corps d'impact (16) s'étend selon un angle compris entre 30° et 100°, en particulier entre 45° et 95°, de préférence entre 60° et 90°.

6. Machine d'épandage selon l'une des revendications 1 à 5, **caractérisée en ce que** la courbure concave des sections de surface réfléchissante (17) concaves du corps d'impact (16) est conçue de manière sensiblement parabolique.

7. Machine d'épandage selon l'une des revendications 1 à 6, **caractérisée en ce que** la section réfléchissante de surface semi-annulaire (19) du corps d'impact (16)
- se transforme de manière continuellement différentiable en une section de surface réfléchissante (17) concave respective ; et/ou
- diverge à son tour en s'éloignant de l'extrémité libre d'une conduite de transport (8) respective ; et/ou
- est courbée de manière convexe au moins dans sa zone centrale côté frontal.

8. Machine d'épandage selon l'une des revendications 1 à 7, **caractérisée en ce que** les sections de surface réfléchissante (17) concaves et, le cas échéant, la section de surface réfléchissante semi-annulaire (19) du corps d'impact (16) sont fixées sur une plaque de base (24).

9. Machine d'épandage selon l'une des revendications 1 à 8, **caractérisée en ce que** le corps d'impact (16) présente une plaque de montage (21) sur laquelle sont fixées les sections de surface réfléchissante (17) concaves et le cas échéant la traverse réfléchissante (18).

10. Machine d'épandage selon les revendications 8 et 9, **caractérisée en ce que** la plaque de montage (21) du corps d'impact (16) est disposée selon un angle supérieur à 90° et inférieur à 150° par rapport à la plaque de base (24).

11. Machine d'épandage selon l'une des revendications 1 à 10, **caractérisée en ce que** les sections de surface réfléchissante (17) concaves et/ou la section de surface réfléchissante semi-annulaire (19) du corps d'impact (16) sont pourvues d'une pluralité de protubérances (20) en forme de verrues, en particulier réparties de manière sensiblement uniforme.

12. Machine d'épandage selon l'une des revendications 1 à 11, **caractérisée en ce que** le corps d'impact (16) est monté au niveau de l'extrémité libre d'un coude d'extrémité (15) d'une conduite de transport (8) respective, dont la courbure s'étend en particulier sensiblement à 90°.

13. Organe d'épandage, lequel est adapté pour une machine d'épandage selon le préambule de la revendication 1, dans lequel l'organe d'épandage présente un corps d'impact (16) pouvant être monté sur l'extrémité libre d'une conduite de transport (8) respective de la machine d'épandage, **caractérisée en ce que** le corps d'impact (16) présente les caractéristiques distinctives de la revendication 1.

14. Organe d'épandage selon la revendication 13, **caractérisé par** les caractéristiques d'au moins l'une des revendications 2 à 11.
